Europäisches Patentamt

European Patent Office

Office européen des brevets

(19)

(11) **EP 0 628 808 B1**

(12) **EUROPÄISCHE PATENTSCHRIFT**

(45) Veröffentlichungstag und Bekanntmachung des Hinweises auf die Patenterteilung:
**13.05.1998 Patentblatt 1998/20**

(51) Int Cl.⁶: **G01N 23/16**

(21) Anmeldenummer: **93109108.6**

(22) Anmeldetag: **07.06.1993**

(54) **Vorrichtung zur Flächengewichtsmessung**

Apparatus for measuring basis weight

Appareil pour mesurer le poids de surface

(84) Benannte Vertragsstaaten:
**DE GB SE**

(43) Veröffentlichungstag der Anmeldung:
**14.12.1994 Patentblatt 1994/50**

(73) Patentinhaber: **HONEYWELL AG**
**63008 Offenbach am Main (DE)**

(72) Erfinder:
• **Schaust, Karlheinz, Dipl.-Phys.**
  **D-56133 Fachbach (DE)**

• **Henn, Reiner, Dipl.-Ing.**
  **D-56587 Gierend (DE)**

(74) Vertreter: **Herzbach, Dieter, Dipl.-Ing. et al**
**Honeywell Holding AG**
**Patent- und Lizenzabteilung**
**Postfach 10 08 65**
**63008 Offenbach (DE)**

(56) Entgegenhaltungen:
**EP-A- 233 389**    **WO-A-88/07671**
**DE-A- 1 812 893**    **US-A- 4 047 029**

**Beschreibung**

Die vorliegende Erfindung bezieht sich auf eine Vorrichtung zur Messung des Flächengewichts eines flächenhaften Meßgutes nach dem Gattungsbegriff des Patentanspruches 1.

Zur Bestimmung des Flächengewichtes von Papierbahnen ist es bekannt, eine Beta-Strahlungsquelle auf der einen Seite der Papierbahn und einen Beta-Strahlungsdetektor auf der anderen Seite der Papierbahn zu verwenden. Als Beta-Strahlungsquellen finden z.B. Promethium 147, Krypton 85 oder Strontium 90 Verwendung. Der Beta-Strahlungsdetektor ist im Stand der Technik üblicherweise eine Ionisationskammer; kann aber auch durch eine Halbleiterdiode vorgegeben sein, die gegenüber der sichtbaren Lichtstrahlung durch eine Abdeckung in Form einer Metallfolie abgeschirmt ist, wie dies aus der WO 88/07671 bekannt ist. Diese bekannte Vorrichtung dient der Messung der Dichte des Meßgutes und somit ebenfalls der Flächengewichtsmessung.

Ferner ist es aus der EP-A-0 233 389 und der DE-A-1 812 893 bekannt, zur Messung des Flächengewichts, der Dichte und der Dicke einer Materialbahn eine stationäre, aus mehreren Elementen bestehende Strahlungsquelle auf der einen Seite der Materialbahn und entsprechend zugeordnete Elemente auf der anderen Seite der Materialbahn anzuordnen.

Schließlich ist es aus der US-A-40 47 029 bekannt zur Gewichts- oder Dickenmessung eines Materials, eine Röntgenstrahlungsquelle quer zu der Materialbahn zu bewegen und die transmittierte bzw. reflektierte Strahlung durch einen mitbewegten Halbleiter-Strahlungsdetektor zu erfassen.

Bei der radiometrischen Flächengewichtsmessung an einem flächenhaften Meßgut, wie z.B. Papier, wird vielfach eine höhere Auflösung im Querprofil gefordert. Dies kann man erreichen durch eine Verkleinerung der Meßfläche auf dem Meßgut, indem man beispielsweise die üblicherweise zwischen Beta-Strahlungsquelle und Meßgut angeordnete Blende entsprechend verkleinert.

Dies führt einerseits zu der geforderten erhöhten Auflösung, andererseits aber zu einer Verringerung der Intensität der Meßstrahlung und damit einhergehend zu einer Verschlechterung des Signal Signal/Rauschverhältnisses. Dem könnte man durch eine Erhöhung der Aktivität der radioaktiven Quelle begegnen. Jedoch sind hierbei enge Grenzen durch die Selbstabsorbtion im radioaktiven Präparat und durch strahlenschutztechnische Auflagen gegeben.

Ausgehend von diesem Stand der Technik ist es daher die Aufgabe der vorliegenden Erfindung, eine Vorrichtung zur Flächengewichtsmessung anzugeben, mit der die gewünscnte Querprofilauflösung in einfacher Weise erreicht werden kann.

Die Lösung dieser Aufgabe gelingt gemäß den kennzeichnenden Merkmalen des Patentanspruches 1. Weitere vorteilhafte Ausgestaltungen der erfindungsgemäßen Vorrichtung zur Flächengewichtsmessung sind den abhängigen Ansprüchen enthehmbar.

Anhand der Figuren der beiliegenden Zeichnung sei im folgenden ein Ausführungsbeispiel der erfindungsgemäßen Vorrichtung beschrieben. Es zeigen:

Fig. 1    eine Seitenansicht der erfindungsgemäßen Vorrichtung; und

Fig. 2    eine Draufsicht auf den verwendeten Detektor.

Fig. 3    einen Querschnitt durch den Detektor

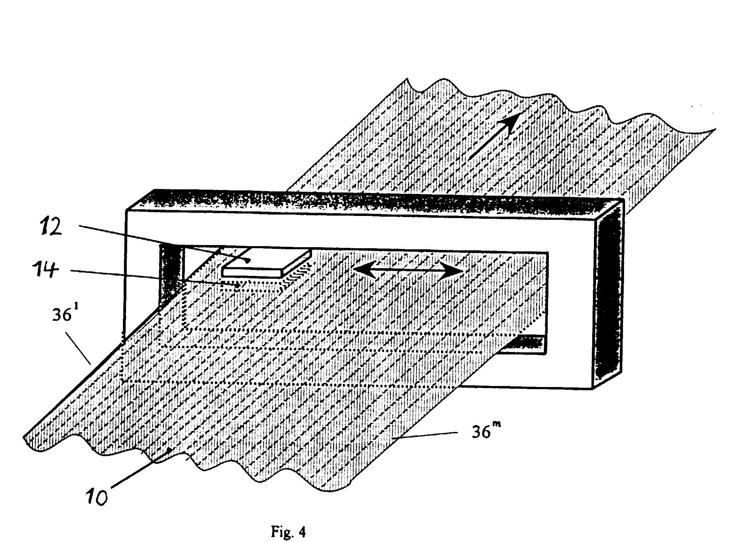

Fig. 4    eine Gesamtansicht des Meßsystemes mit Meßgut und Meßwagen

Ein flächenhaftes Meßgut 10 befindet sich zwischen dem oberen Teil 12 und dem unteren Teil 14 eines Meßkopfes, der quer zu dem sich bewegenden Meßgut 10 bewegt wird. In dem oberen Teil 12 ist eine radioaktive Quelle 16 angeordnet, die durch Promethium 147, Krypton 85 oder Strontium 90 vorgegeben sein kann. Eine Blende 18 mit rechteckiger öffnung begrenzt die radioaktive Stranlung, die durch das Meßgut 10 hindurchtritt und auf einen Detektor 20 in dem unteren Teil 14 des Meßkopfes auftrifft. Durch Einschwenken einer Fahne 33 aus der Position 33a in die Position 33b kann der Strahlaustritt verschlossen werden, um eine Zweipunktstandardisierung durchzuführen und sowohl den Dunkelstrom der Detektoranordnung als auch die Signalhöhe ohne Meßgut messen zu können. Der Detektor 20 ist ein Halbleiterdetektor und insbesondere ein aus mehreren streifenförmigen Photodioden $22^1$ bis $22^n$ bestehendes makroskopisches Photodetektor-Zeilenarray. Jede Photodiode $22^1$ bis $22^n$ ist über einen Verstärker $24^1$ bis $24^n$ an eine elektische Signalverarbeitungseinheit 26 angeschlossen.

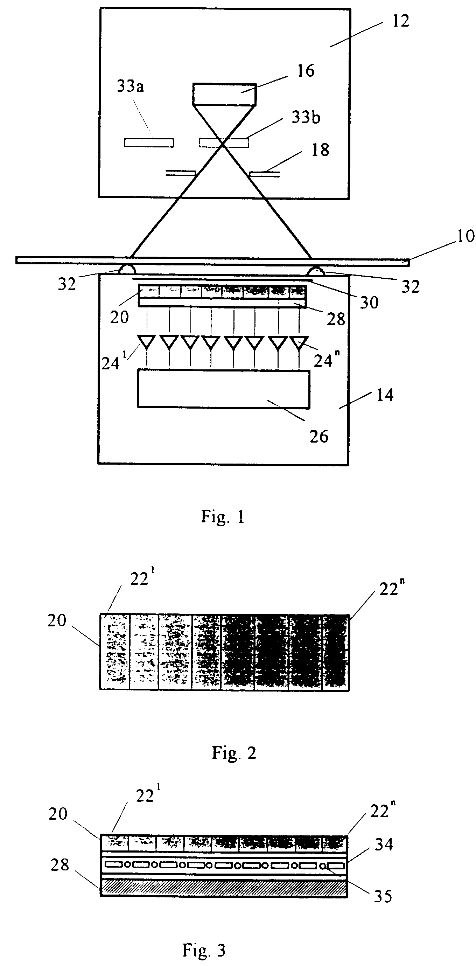

Zur Minimierung von Dunkelströmen infolge von Temperaturänderungen sind die Photodioden $22^1$ bis $22^n$ auf einem temperaturstabilisierten Kühlelement 28 angeordnet. Ferner sind die Photodioden $22^1$ bis $22^n$ auf der dem Meßgut 10 benachbarten Seite mit einer lichtdichten Folie 30 abgeschirmt. Die Folie 30 besteht vorzugsweise aus Metall, z.B. aus Aluminium mit einer Dicke von mehreren um. Eine besonders günstige Anordnung zur Minimierung von Dunkelstromänderungen und Änderungen der Stromverstärkung der Verstärkerbaugruppen $24^1$ bis $24^n$ durch Temperaturdrift der Verstärker ist eine schichtweise Anordnung von Kühlelement 28, den Verstärkern 24, von hochohmigen Widerständen 35, die die Stromverstärkung bestimmen, und den Photodioden $22^1$ bis $22^n$ (Fig. 3).

Das Meßgut 10 wird über Bahnführungselemente 32, 32' an dem Detektor-Meßkopf 14 vorbeigeführt, um es in geringem konstanten Abstand zu dem Photodioden-Zeilenarray 20 zu halten.

In der elektronischen Signalverarbeitungseinheit 26 werden alle Photoströme einzeln erfaßt und ausgewertet, um das Gewicht der zugeordneten Flächenelemente zu bestimmen. Darüber hinaus werden zur Erhöhung des Signal/Rauschverhältnisses nach einer Profilmessung die Meßergebnisse von positionsgleichen Photodioden gemittelt. Dies ist möglich, da nach jeder Traversierung jedes der m Meßelemente $36^1$ bis $36^m$ im Querprofil von den n Photodioden 22 gemessen wird. Damit ergeben sich n x m Meßwerte $m_{ij}$ für eine Traversierung. Das Meßergebnis $M_i$ für das Meßelement 36 mit der Nummer i errechnet sich dann aus dem Mittelwert von n Meßwerten:

$$M_i = \frac{1}{n} \sum_{j=1}^{n} m_{ij}$$

Dadurch wird erreicht, daß das Signal/Rauschverhältnis gleich ist einer Messung mit nur einer einzelnen großen Photodiode und einer großen Meßfläche und damit einer niedrigen Ortsauflösung.

## Patentansprüche

1. Vorrichtung zur Messung des Flächengewichts eines flächenhaften Meßgutes (10), wie z.B. Papier, Kunststoffolie oder Gewebe, mit einer radioaktiven Quelle (16) auf der einen Seite des Meßgutes und einem Halbleiterdetektor (20) auf der anderen Seite des Meßgutes, **dadurch gekennzeichnet,** daß der Halbleiterdetektor (20) gemäß einem Photodioden-Zeilenarray ($22^1$- $22^n$) segmentiert ist und quer zu dem Meßgut (10) bewegt wird und daß Mittel vorhanden sind, die neben einer Erfassung der Einzelströme jeder Photodiode ($22^1$-$22^n$) eine Mittelung der Photoströme in Bezug auf das Meßgut positionsgleicher Photodioden vornehmen.

2. Vorrichtung nach Anspruch 1, **gekennzeichnet durch** eine Blende (18) zwischen der radioaktiven Quelle (16) und dem Photodioden-Zeilenarray (20), wobei die Blendenöffnung an die Geometrie des Photodioden-Zeilenarrays angepaßt ist.

3. Vorrichtung nach Anspruch 2, **dadurch gekennzeichnet,** daß an jede Photodiode ($22^1$-$22^n$) des Zeilenarrays (20) ein Verstärker ($24^1$ - $24^n$) angeschlossen ist.

4. Vorrichtung nach einem der Ansprüche 1 bis 3, **dadurch gekennzeichnet,** daß das Photodioden-Zeilenarray (20) auf einem temperaturstabilisierten Kühlelement (28) angeordnet ist.

5. Vorrichtung nach Anspruch 4, **dadurch gekennzeichnet,** daß neben dem Photodioden-Zeilenarray (20) die Verstärker (34) und jeweils zugeordnete hochohmige Widerstände (35) aufdem temperaturstabilisierten Kühlelement (28) angeordnet sind.

6. Vorrichtung nach einem der vorangehenden Ansprüche, **gekennzeichnet durch** Bahnführungselemente (32, 32'), um das Meßgut (10) in definiertem Abstand an dem Photodiodenarray (20) vorbeizuführen.

## Claims

1. Apparatus for measuring the basis weight of a laminer material (10) under test, as e.g. paper, plastic foil or textile fabric, comprising a radioactive source (16) on one side of said material and a semiconductor detector (20) on the other side of said material, **characterized in that** said semiconductor detector (20) is segmented according to a photodiode line array ($22^1$-$22^n$) and is transversely moved with respect to said material under test (10) and that means are provided which, besides the detection of the individual currents of each photodiode ($22^1$-$22^n$) of the array implement an averaging of the photo currents of equal positioned photodiodes with respect to the material under test.

2. Apparatus according to claim 1, **characterized by** an aperture (18) between the radioactive source (16) and the photodector line array (20), whereat the opening of the aperture is matched to the geometry of the photodetector line array.

3. Apparatus according to claim 2, **characterized in that** an amplifier ($24^1$-$24^n$) is connected to each photodiode ($22^1$-$22^n$) of the line array (20).

4. Apparatus according to one of claims 1 to 3, **characterized in that** the photodiode line array (20) is located on a cooling element (28) being stabilized with respect to temperature.

5. Apparatus according to claim 4, **characterized in that** besides said photodiode line array (20) said amplifiers (34; $24^1$-$24^n$) and corresponding highly resistive resistors (35) are arranged on said cooling element (28) being stabilized with respect to temperature.

6. Apparatus according to one of the preceding claims, **characterized by** web guiding elements (32, 32') in order to conduct the material (10) under test over the photodiode array (20) with a predetermined distance.

## Revendications

1. Dispositif pour mesurer le poids par unité de surface d'un matériau plat à mesurer (10), comme par exemple du papier, une feuille de matière plastique ou un tissu, comportant une source radioactive (16) située d'un côté du matériau à mesurer, et un détecteur à semi-conducteurs (20) situé de l'autre côté du matériau à mesurer, caractérisé en ce que le détecteur à semi-conducteurs (20) est segmenté conformément à un réseau de lignes de photodiodes $(22^1\text{-}22^n)$ et est déplacé transversalement par rapport au matériau à mesurer (10), et qu'il est prévu des moyens qui, outre le fait de détecter les courants individuels des différentes photodiodes $(22^1\text{-}22^n)$, forment la moyenne des courants photoélectriques de photodiodes qui sont situées dans la même position par rapport au matériau à mesurer.

2.  Dispositif selon la revendication 1, caractérisé par un diaphragme (18) disposé entre la source radioactive (16) et le réseau (20) de lignes de photodiodes, l'ouverture du diaphragme étant adaptée à la géométrie du réseau de lignes de photodiodes.

3.  Dispositif selon la revendication 2, caractérisé en ce qu'un amplificateur $(24^1\text{-}24^n)$ est raccordé à chaque photodiode $(22^1\text{-}22^n)$ du réseau de lignes (20).

4.  Dispositif selon l'une des revendications 1 à 3, caractérisé en ce que le réseau (20) de lignes de photodiodes est disposé sur un élément de refroidissement (28), dont la température est stabilisée.

5.  Dispositif selon la revendication 4, caractérisé en ce qu'en dehors du réseau (20) de lignes de photodiodes, les amplificateurs (34) et des résistances de forte valeur ohmique (35) respectivement associées sont disposés sur l'élément de refroidissement (28), dont la température est stabilisée.

6.  Dispositif selon l'une des revendications précédentes, caractérisé par des éléments (32, 32') de guidage sur un trajet de déplacement pour faire passer le matériau à mesurer (10) à une distance définie devant le réseau (20) de photodiodes.

Fig. 1

Fig. 2

Fig. 3

Fig. 4